# EUROPÄISCHE PATENTSCHRIFT

(11) **EP 2 981 489 B1**
(45) Veröffentlichungstag und Bekanntmachung des Hinweises auf die Patenterteilung: **23.08.2017**
(21) Anmeldenummer: 14714592.4
(22) Anmeldetag: 26.03.2014
(51) Int. Cl.: B65G 29/00, B65G 47/84

(54) **TRANSPORTVORRICHTUNG FÜR BEHÄLTERBEHANDLUNGSMASCHINEN**
TRANSPORT APPARATUS FOR CONTAINER HANDLING MACHINES
DISPOSITIF DE TRANSPORT POUR MACHINES DE TRAITEMENT DE RÉCIPIENTS

(30) Priorität: 03.04.2013 DE 102013103310
(43) Veröffentlichungstag der Anmeldung: 10.02.2016
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2014/000817
(87) Internationale Veröffentlichungsnummer: WO 2014/161643

(56) Entgegenhaltungen:
- EP-A1- 0 290 074
- EP-A1- 0 539 735
- EP-A1- 1 048 595
- EP-A1- 1 352 872
- WO-A1-97/45323
- WO-A1-97/45347
- FR-A1- 2 918 652

## Beschreibung

Die Erfindung bezieht sich auf eine Transportvorrichtung für Behälterbehandlungsmaschinen gemäß dem Oberbegriff des Patentanspruchs 1. Transportvorrichtungen zur Zuführung und/oder Abführung von Behältern zu Behälterbehandlungsmaschinen sind hinlänglich bekannt. Insbesondere sind Transportvorrichtungen bekannt geworden, die ein rotierender antreibbares Transportelement mit einer Vielzahl von Behälteraufnahmen aufweisen, die umfangsseitig am Transportelement angeordnet sind und mittels denen die Behälter zumindest von einer ersten Position in eine zweite Position gefördert werden um damit beispielsweise einer an der Behälterbehandlungsmaschine vorgesehenen Behälterbehandlungsstation zu behandelnde Behälter zuzuführen.
Gattungsgemäße Transportvorrichtungen weisen einen Unterbau auf, mittels dem insbesondere das Transportelement gegenüber einer bauwerkseitigen Aufstellfläche aufsteht. In einem derartigen Unterbau können beispielsweise der Antrieb für das Transportelement oder gegebenenfalls weitere Funktionselemente, beispielsweise Steuereinrichtungen, Sensoren etc. untergebracht sein. Ein derartiger Unterbau füllt den Bauraum zwischen dem Transportelement und der Aufstellfläche völlig oder im Wesentlichen völlig aus, so dass der Bauraum anderweitig nicht mehr nutzbar ist.
Die Druckschrift DE 10 2008 018 516 A1 offenbart eine Füllvorrichtung umlaufender Bauart mit einem hängend gehaltenen, kombinierten Einlauf-/Auslaufstern.
Des Weiteren sind aus den Druckschriften DE 198 35 369 C1 und EP 1 295 818 A1 hängend gehaltene Transfersterne bekannt. EP 0 539 735 A1 beschreibt eine gattungsgemäße Transportvorrichtung. Ausgehend hiervon ist es Aufgabe der Erfindung, eine Transportvorrichtung anzugeben, die eine flexiblere Nutzung des Bauraums unterhalb des Transportelements gewährleistet.
Die Aufgabe wird ausgehend vom Oberbegriff des unabhängigen Patentanspruchs 1 durch dessen kennzeichnende Merkmale gelöst

Der wesentliche Aspekt der erfindungsgemäßen Transportvorrichtung besteht darin, dass das Transportelement hängend an einer auf einer Aufstellfläche aufstehenden Befestigungseinrichtung gehalten ist. Durch diese hängende Anordnung des Transportelements wird unterhalb des Transportelements ein unterbaufreier Raum geschaffen, der flexibel nutzbar wird. Dadurch lässt sich die erfindungsgemäße Transportvorrichtung insgesamt flexibler einsetzen.

In einem bevorzugten Ausführungsbeispiel wird die Befestigungseinrichtung durch ein das Transportelement zumindest teilweise oberseitig überspannendes Gestell gebildet. Das Gestell kann beispielsweise eine oder mehrere bodenaufstehende und/oder bodenverankerte Säulen aufweisen, die eine Länge derart aufweisen, dass sich die oberen freien Enden oberhalb des Transportelements befinden. Für den Fall, dass mehrere Säulen vorgesehen sind, kann ein oberseitig diese freien Enden miteinander verbindendes Verbindungselement vorgesehen sein, das beispielsweise plattenförmig ausgebildet ist.

Besonders bevorzugt weist die Befestigungseinrichtung zumindest ein die vertikale Maschinenachse bildendes Konstruktionselement auf, das von dem Transportelement umfangsseitig umgeben wird. Das Konstruktionselement ist vorzugsweise stangenförmig bzw. zylinderartig ausgebildet und ist an seinem oberen freien Ende zumindest mittelbar mit der zumindest einen Säule verbunden. Vorzugsweise ist eine drehfeste Verbindung vorgesehen. Das Konstruktionselement bildet damit eine Verbindung zwischen dem oberseitig vorgesehenen Teil der Befestigungseinrichtung und unterseitig unter dem Transferstern zu halternden Funktionselementen.

In einem bevorzugten Ausführungsbeispiel steht das Konstruktionselement unterseitig über das Transportelement vor und an dem unterseitig vorstehenden Abschnitt des Konstruktionselements sind weitere, mit dem Transportelement zusammenwirkende Führungs- oder Transfereinrichtungen gehalten. Derartige Führungs- oder Transfereinrichtungen können beispielsweise, aber nicht ausschließlich, Führungsbleche, Außenführungen etc. sein. Damit lassen sich unterseitig unter dem Transportelement durch die Befestigungseinrichtung getragen auch weitere Einrichtungen halten, ohne dass dafür ein Unterbau vorgesehen werden muss. Dies ermöglicht eine leichte Bauweise mit nur wenigen Bauteilen und damit eine Reduzierung von Bauteilen insbesondere im Hygienebereich einer Behälterbehandlungsmaschine.

In einem bevorzugten Ausführungsbeispiel ist zumindest ein Transporteur zum Zu- und/oder Abführen von Behältern zu/von dem Transportelement vorgesehen, wobei dieser Transporteur zumindest abschnittsweise durch die das Transportelement halternde Befestigungseinrichtung getragen wird. Der Transporteur kann beispielsweise ein Linearförderer sein, insbesondere ein Transportband oder eine Transportkette. Durch die Halterung des Transporteurs zumindest abschnittsweise an der Befestigungseinrichtung, die das Transportelement trägt, kann auch für diesen Transporteur auf einen entsprechenden Unterbau im Bereich des Transportelements verzichtet werden.

Besonders bevorzugt ist ein einziger Transporteur zum Zu- und Abführen von Behältern an das/von dem Transportelement vorgesehen. Vorzugsweise ist das Transportelement derart ausgebildet, dass dieses sowohl eine Zuführung von zu behandelnden Behälters an eine Behälterbehandlungsmaschine bzw. auch eine Abführung von bereits behandelten Behältern von der Behälterbehandlungsmaschine bewirkt, und zwar insbesondere derart, dass eine durch Entnahme eines Behälters aus einer Behälteraufnahme freigewordene Behälteraufnahme im nächsten Prozessschritt mit einem bereits behandelten Behälter befüllt wird, so dass bei einer Weiterdrehung des Transportelements dieser bereits behandelte Behälter abtransportiert und dem Transporteur zugeführt wird. Damit kann der im Bereich des Transportelements verlaufende Transporteur gleichzeitig für die Zuführung von zu behandelnden Behältern und für die Abführung von bereits behandelten Behältern verwendet werden.

Besonders bevorzugt ist der Transporteur unter dem Transportelement hindurchlaufend ausgebildet ist. Damit wird der aufgrund des fehlenden Unterbaus freigewordene Bauraum vorteilhaft zur Durchführung des Transporteurs verwendet.

Besonders bevorzugt wird der Transporteur geradlinig unterhalb dem Transportelement hindurchgeführt, d.h. die Transportrichtung der zugeführten, zu behandelnden Behälter entspricht der Transportrichtung der abgeführten, bereits behandelten Behälter.
Besonders bevorzugt ist der Transporteur unter oder zentriert unter der Maschinenachse des Transportelements hindurchlaufend ausgebildet. Damit lässt sich eine optimale Zuführung der Behälter in Richtung des Mittelpunkts des im Wesentlichen kreisringförmig ausgebildeten Transportelements bewirken.
In einem besonders bevorzugten Ausführungsbeispiel ist als Antrieb für das Transportelement ein Direktantrieb oder ein Torque-Motor vorgesehen. Damit lässt sich weiterer Bauraum einsparen. Bevorzugt ist der Antrieb oberhalb des Transportelements angeordnet, und zwar weiterhin vorzugsweise zwischen dem Transportelement und einem oberen, drehfest angeordneten Konstruktionselement der Befestigungseinrichtung. Weiterhin vorzugsweise ist der Antrieb umfangsseitig um das Konstruktionselement ausgebildet, das die Drehachse für das Transportelement bildet. Der Antrieb kann insbesondere zum getakteten bzw. intermittierenden Antrieb des Transportelements ausgebildet sein, um die Behälter schrittweise der Behälterbehandlungsmaschine zuzuführen. Erfindungsgemäß ist der Antrieb zwischen einem stationär an der Befestigungseinrichtung gehaltenen ersten Antriebselement und einem drehbar am Konstruktionselement gelagerten zweiten Antriebselement angeordnet. Vorzugsweise sind das erste Antriebselement und das zweite Antriebselement hülsenartig insbesondere kreisringförmig ausgebildet. Weiterhin vorzugsweise weist das erste Antriebselement einen größeren Durchmesser als das zweite Antriebselement auf und die Antriebselemente sind zueinander bzw. in Bezug auf die erste Maschinenachse konzentrisch angeordnet. Durch eine zudem vorgesehene Drehlagerung zwischen dem ersten und zweiten Antriebselement lässt sich das zweite Antriebselement relativ zum ersten Antriebselement bzw. zum drehfest angeordneten, die erste Maschinenachse bildenden Konstruktionselement verdrehen. Das zweite Antriebselement bildet dabei vorzugsweise die Antriebswelle des Antriebs.

Besonders bevorzugt erstreckt sich das zweite Antriebselement mit einem ersten Ende in den Antrieb bzw. das erste Antriebselement hinein und ist an einem zweiten Ende mit dem Transportelement verbunden. Vorzugsweise steht das zweite Ende des zweiten Antriebselements unterseitig gegenüber dem ersten Antriebselement vor, so dass an diesem vorstehenden freien Ende die Befestigung des Transportelements erfolgen kann.

In einem bevorzugten Ausführungsbeispiel ist das Transportelement ein Transferstern, d.h. das Transportelement ist abgesehen von den daran umfangsseitig vorgesehenen Ausnehmungen, die die Behälteraufnahmen bilden, kreisscheibenförmig ausgebildet. Damit lassen sich die Behälter durch das Transportelement auf einer Kreisbahn bewegen, wobei an dieser Kreisbahn der Behältereinlauf, die Übergabeposition an die Behälterbehandlungsmaschine bzw. der Behälterauslauf vorgesehen ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine erfindungsgemäße Transportvorrichtung gemäß einem ersten Ausführungsbeispiel in Draufsichtdarstellung;
- Fig.2: beispielhaft die erfindungsgemäße Transportvorrichtung aus Fig. 1 in einer seitlichen Schnittdarstellung entlang der Schnittlinie A-A;
- Fig.3: beispielhaft eine erfindungsgemäße Transportvorrichtung gemäß einem zweiten Ausführungsbeispiel in einer seitlichen Schnittdarstellung; und
- Fig. 4: beispielhaft eine ausschnittsweise Darstellung eines Transportelements mit ihm zugeordnetem Antrieb in einer seitlichen Schnittdarstellung.

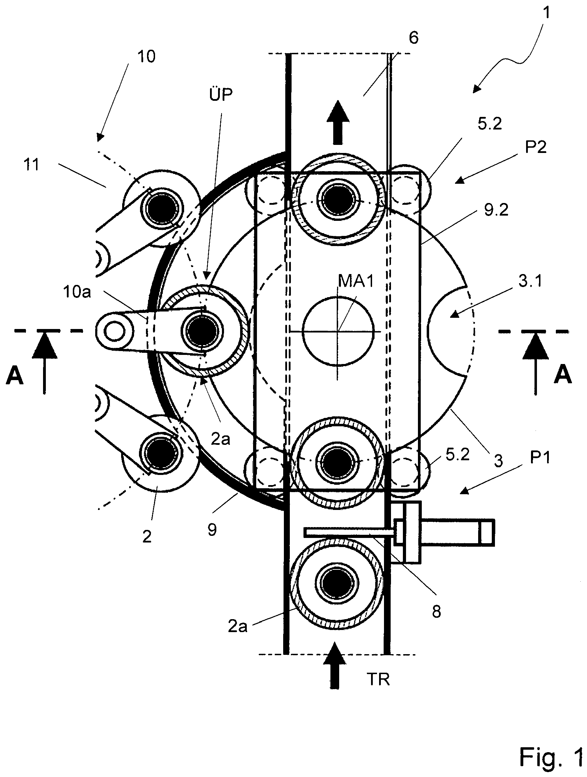

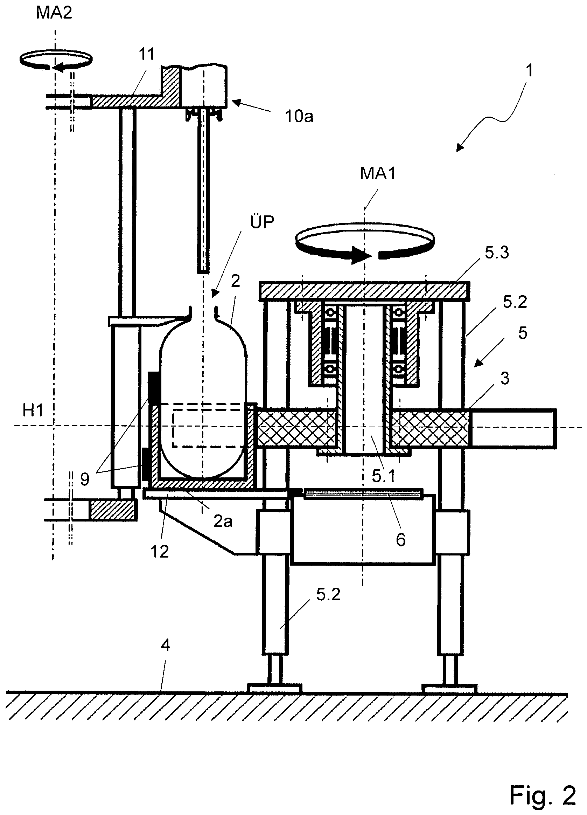

In den Figuren 1 und 2 ist eine erfindungsgemäße Transportvorrichtung 1 in einem ersten Ausführungsbeispiel gezeigt. Die Transportvorrichtung 1 dient der Zuführung von Behältern 2 zu einer Behälterbehandlungsmaschine 10 bzw. der Abführung bereits behandelter Behälter 2 von der Behälterbehandlungsmaschine 10.

Die Transportvorrichtung 1 weist ein um eine vertikale Maschinenachse MA1 rotierend antreibbares Transportelement 3 auf, das zur Förderung der Behälter 2 auf einer Kreisbahn bzw. Teilkreisbahn ausgebildet ist. Dazu weißt das Transportelement 3 eine Vielzahl von Behälteraufnahmen 3.1 auf, die umfangsseitig verteilt und in festen Winkelabständen beanstandet zueinander an dem Transportelement 3 vorgesehen sind. Das Transportelement 3 ist insbesondere ein Transferstern, d.h. das Transportelement 3 ist im Wesentlichen scheibenartig ausgebildet und weist umfangsseitig an die zu transportierenden Behälter 2 bzw. Behälterträger 2a angepasste Ausnehmungen auf, die die Behälteraufnahmen 3.1 bilden.

Im gezeigten Ausführungsbeispiel erfolgt die Zuführung der Behälter 2 bzw. deren Abführung mittels Behälterträger 2a, im Folgenden auch als Pucks bezeichnet. Derartige Behälterträger 2a finden insbesondere dann Anwendung, wenn zum Umfallen neigende Behälter 2 bzw. Behälter, die keine eigenständige Bodenstandfläche aufweisen, beispielsweise so genannte PET-Keg's verwendet werden. Im gezeigten Ausführungsbeispiel sind dies großvolumige Behältnisse aus einem Kunststoffmaterial mit einem Volumen von 101, 201 oder 301. Jedoch können mit der Transportvorrichtung 1 auch Behälter 2 ohne Behälterträger 2a transportiert werden.

Die Zuführung der Behälter 2 erfolgt im gezeigten Ausführungsbeispiel mittels eines Transporteurs 6. Die Behälter 2 werden durch den Transporteur 6 aufrecht stehend, d.h. in einer vertikalen Ausrichtung der Behälterhochachse einem Stopperelement 8 zugeführt, das eine zeitlich getaktete Freigabe bzw. Weiterleitung der Behälter 2 an das Transportelement 3 bewirkt. Zur Mitführung der Behälter 2 durch das Transportelement 3 sind an diesem umfangsseitig angeordnete , die Behälteraufnahmen 3.1 bildende Ausnehmungen vorgesehen, in welche die Behälter 2 bzw. die Behälterträger 2a zumindest teilweise umfangsseitig aufgenommen werden können, so dass ein die Mitführung bewirkender Eingriff des Behälters 2 bzw. des Behälterträgers 2a in das Transportelement 3 erfolgt. Durch das Stopperelement 8 wird die Weiterleitung eines angestauten Behälters 2 zeitlich getaktet derart freigegeben, dass dieser durch den Transporteur 6 in eine Behälteraufnahme 3.1 des Transportelements 3 eingefördert wird. Ausgehend vom Einlass P1 wird der in der Behälteraufnahme 3.1 des Transportelements 3 zumindest teilweise aufgenommene Behälter 2 durch eine Drehung des Transportelements 3 im Uhrzeigersinn an die Übergabeposition ÜP gefördert, an der die Übergabe des Behälters 2 an die Behälterbehandlungsmaschine 10 erfolgt. Um ein seitliches bzw. radiales Ausweichen des Behälters 2 bzw. des Behälterträgers 2a zu verhindern, ist eine Außenführung 9 vorgesehen, die zumindest in einer Teilkreisbahn um das Transportelement 3 herum radial zu diesem beanstandet verläuft.

Das Transportelement 3 kann insbesondere durch einen dafür geeigneten Antrieb 7, insbesondere einen Servomotor, getaktet angetrieben sein, so dass das Transportelement 3 und damit in den Behälteraufnahmen 3.1 befindlichen Behälter 2 intermittierend bzw. zeitlich getaktet der Übergabeposition ÜP zugeführt werden.

Bevorzugt bildet das Transportelement 3 ein Fördermittel, das sowohl die Zuführung der noch zu behandelnden Behälter 2 zu der Behälterbehandlungsmaschine 10 als auch die Abführung bereits behandelter Behälter 2 von der Behälterbehandlungsmaschine 10 bewirkt. Dabei werden vorzugsweise an der Übergabeposition ÜP ein noch zu behandelnder Behälter 2 an eine Behandlungsstation 10a der Behälterbehandlungsmaschine 10 übergeben. Die Behälterbehandlungsmaschine 10 ist beispielsweise eine Maschine umlaufender Bauart mit einem Rotor 11, an dem umfangsseitig eine Vielzahl von in festen Winkelabständen zueinander beanstandete Behandlungsstationen 10a vorgesehen sind. Der Rotor 11 ist hierbei um eine zweite Maschinenachse MA2 umlaufend angetrieben, insbesondere getaktet bzw. intermittierend angetrieben, wobei die zweite Maschinenachse MA2 parallel und beanstandet zur ersten Maschinenachse MA1 verläuft.

Nach der Übergabe eines zu behandelnden Behälters 2 an eine Behandlungsstation 10a der Behälterbehandlungsmaschine 10 erfolgt beispielsweise durch Drehung des Rotors 11 und bei stillstehendem Transportelement 3 eine Platzierung einer nachfolgenden Behandlungsstation 10a an der Übergabeposition ÜP, so dass ein bereits behandelter Behälter 2 an die freigewordene Behälteraufnahme 3.1 abgegeben werden kann. Durch eine getaktete Weiterdrehung des Transportelements 3 wird der bereits behandelte Behälter 2 einem Auslauf P2 zugeführt und dort mittels eines Transporteurs 6 abtransportiert. Alternativ ist es möglich, den Behälter 2 einer weiteren Behälterbehandlungsmaschine zuzuführen. Gleichzeitig mit der Drehung des Transportelements 3 wird ein neuer, zu behandelnder Behälter 2 der Übergabeposition ÜP zugeführt.

Wie insbesondere in Figur 1 erkennbar, wird das Zuführen der Behälter 2 bzw. der Behälterträger 2a zu dem Einlauf P1 des Transportelements 3 bzw. das Abführen der Behälter 2 bzw. der Behälterträger 2a von dem Auslauf P2 durch einen einzigen Transporteur 6 bewirkt, der im gezeigten Ausführungsbeispiel als linearer Förderer, insbesondere als Transportband oder Transportkette ausgebildet ist. Dieser Transporteur 6 verläuft unterhalb des Transportelements 3, d.h. vertikal unterhalb des Bewegungsraums, in dem die Behälter 2 durch das Transportelement 3 gefördert werden. In dem in den Figuren 1 und 2 gezeigten Ausführungsbeispiel verläuft der Transporteur 6 unterhalb, vorzugsweise mittig unterhalb der ersten Maschinenachse MA1, um die sich das Transportelement 3 zu drehen vermag. Durch diese Durchführung des Transporteurs 6 unter dem Transportelement 3 ist es möglich, den Zu- und Abtransport durch einen einzigen durchgehenden Transporteur 6 zu bewirken.

Um eine Durchführung des Transporteurs 6 unterhalb des Transportelements 3 vollziehen zu können, ist das Transportelement 3 unterbaufrei ausgebildet. Diese unterbaufreie Ausbildung wird durch eine hängende Halterung des Transportelements 3 an einer auf einer Aufstellfläche 4 aufstehenden Befestigungseinrichtung 5 bewirkt. Die Befestigungseinrichtung 5, die vorzugsweise gestellartig ausgebildet ist, weist im gezeigten Ausführungsbeispiel vier Säulen 5.2 auf, die in vertikaler Richtung von der Aufstellfläche 4 abstehen und eine Höhe derart aufweisen, dass sich die oberen freien Enden oberhalb der Höhenebene H1 des Transportelements 3 befinden. Jeweils ein Säulenpaar der Säulen 5.2 ist in Transportrichtung TR des Transporteurs 6 vor dem Transportelement 3 bzw. hinter dem Transportelement 3 vorgesehen und zwar derart, dass jeweils eine Säule 5.2 eines Säulenpaares links und die weitere Säule 5.2 dieses Säulenpaares rechts von dem Transporteur 6 aufsteht.

Die oberen freien Enden der Säulen 5.2 sind mittels eines Verbindungselements 5.3, das im gezeigten Ausführungsbeispiel plattenartig ausgebildet ist, miteinander verbunden. An diesem Verbindungselement 5.3 erfolgt die hängende Halterung des Transportelements 3. Hierzu steht unterseitig von dem Verbindungselement 5.3 ein Konstruktionselement 5.1 ab, d.h. das Konstruktionselement 5.1 verläuft vertikal und bildet die erste Maschinenachse MA1. Das Konstruktionselement 5.1 ist vorzugsweise stangen- bzw. zylinderartig ausgebildet und bildet die Drehachse für das Transportelement 3. Vorzugsweise ist das Konstruktionselement 5.1 drehfest mit dem Verbindungselement 5.3 verbunden. Das Konstruktionselement 5.1 weist eine Länge derart auf, das es unterseitig mit dem Transportelement 3 bündig abschließt oder nur einen geringfügigen unterseitigen Überstand gegenüber dem Transportelement 3 aufweist. Damit ist es möglich, unterhalb des Konstruktionselements 5.1 den Transporteur 6 hindurchzuführen.

Die dargestellte, das Transportelement 3 teilweise überbauende Befestigungseinrichtung 5 dient im gezeigten Ausführungsbeispiel der Halterung weiterer Funktionselemente, die die Zuführung bzw. Abführung der Behälter 2 zu der Behälterbehandlungsmaschine 10 mitbewirken. Beispielsweise wird der Transporteurs 6 zumindest abschnittsweise von der Befestigungseinrichtung 5 getragen. Insbesondere verläuft der Transporteur 6 zwischen den Säulen 5.2 der Befestigungseinrichtung 5, wobei Halterungen des Transporteurs 6 mit den Säulen 5.2 verbunden sind. Ebenso ist es möglich, dass die Geleitbleche 12, auf denen die Aufstellflächen der Behälter 2 bzw. der Behälterträger 2a bei Förderung durch das Transportelement 3 gleiten bzw. die Außenführung, die zur Verhinderung des radialen Ausweichens der Behälter 2 bei Förderung durch das Transportelement 3 dienen, an der Befestigungseinrichtung 5, insbesondere deren Säulen 5.2 angeordnet sind.

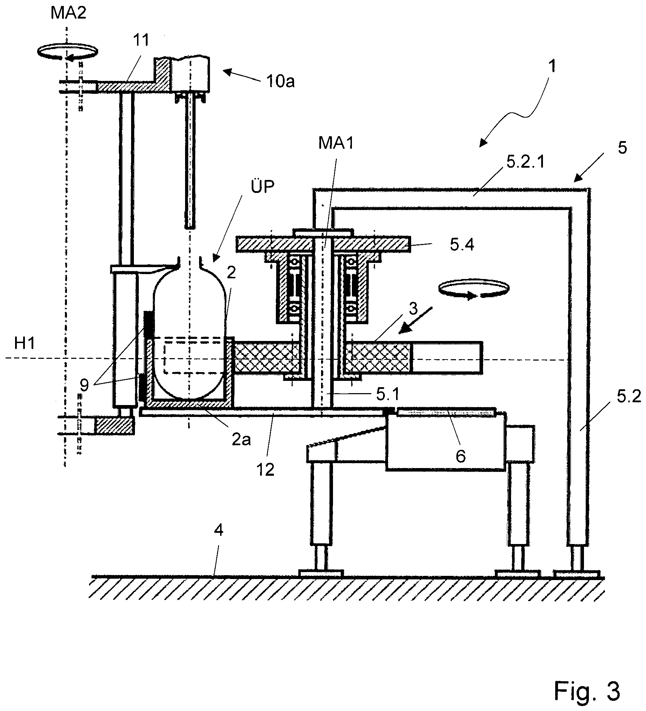

In Figur 3 ist eine weitere Ausführungsform einer erfindungsgemäßen Transportvorrichtung 1 gezeigt. Nachfolgend werden die Unterschiede zu dem zuvor beschriebenen Ausführungsbeispiel aufgezeigt, wobei, sofern nicht anders angegeben, die zuvor getroffenen Ausführungen auch auf dieses Ausführungsbeispiel zutreffen. Die hängende Halterung des Transportelements 3 wird in diesem Ausführungsbeispiel durch eine Befestigungseinrichtung 5 bewirkt, die zumindest eine auf der Aufstellfläche 4 aufstehende Säule 5.2 mit einem armartig das Transportelement 3 zumindest teilweise übergreifenden Säulenabschnitt 5.2.1 aufweist, der vorzugsweise horizontal oberhalb des Transportelements 3 verläuft. An diesem Säulenabschnitt 5.2.1 ist das zylindrisch ausgebildete Konstruktionselement 5.1 befestigt, das die erste Maschinenachse MA1 des Transportelements 3 bildet.

Im gezeigten Ausführungsbeispiel steht das Konstruktionselement 5.1 unterseitig um eine Teilelänge gegenüber dem Transportelement 3 vor. An dem vorstehenden freien Ende sind mit dem Transportelement 3 zusammenwirkende Funktionselemente befestigt, beispielsweise das Gleitblech 12, auf dem die Behälter 2 bzw. die Behälterträger 2a bei Drehung des Transportelements 3 gleitend verschoben werden. Des Weiteren kann zumindest mittelbar an diesem Konstruktionselement 5.1 auch die Außenführung 9 gehalten sein.

Der Transporteur 6 ist im gezeigten Ausführungsbeispiel versetzt zur ersten Maschinenachse MA1 unter dem Transportelement 3 hindurchgeführt, und zwar auf der der Behälterbehandlungsmaschine 10 abgewandten Seite der ersten Maschinenachse MA1. Der Transporteur 6 ist im gezeigten Ausführungsbeispiel an einer eigenständigen Aufstelleinrichtung gehalten, kann jedoch abweichend hiervon ebenfalls an der Befestigungseinrichtung 5 des Transportelements 3 gehalten werden.

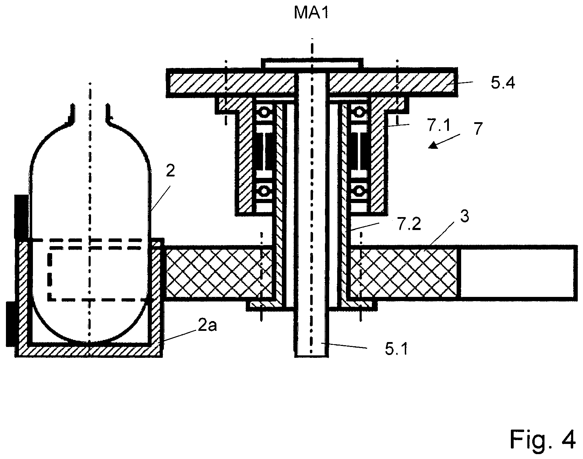

In Figur 4 ist das Transportelement 3 einer erfindungsgemäßen Transportvorrichtung 1 in einem höheren Detaillierungsgrad gezeigt. Zur Einleitung eines Drehmoments an das Transportelement 3 ist ein Antrieb 7 vorgesehen, der im gezeigten Ausführungsbeispiel ein Direktantrieb, insbesondere ein sogenannter Torque-Motor ist. Dieser Antrieb 7 ist zwischen einem fest mit der Befestigungseinrichtung 5 verbundenen plattenförmigen Konstruktionselement 5.4, das auch durch das Verbindungselement 5.3 gebildet sein kann, und dem Transportelement 3 vorgesehen. An dem plattenförmigen Konstruktionselement 5.4 ist unterseitig in Richtung des Transportelements 3 abstehend eine kreiszylinderförmig ausgebildete Hülse vorgesehen, die ein erstes, äußeres Antriebselement 7.1 des Antriebs 7 bildet. Das äußere Antriebselement 7.1 kann hierbei einen radial nach außen abstehenden Flansch aufweisen, mit dem dieses in geeigneter Weise an dem Konstruktionselement 5.4 befestigt ist. Das erste Antriebselement 7.1 ist vorzugsweise zentriert gegenüber dem Konstruktionselement 5.1 angeordnet und umgibt dieses umfangsseitig und beabstandet. Weiterhin ist ein weiteres, hülsenförmig ausgebildetes Element als zweites Antriebselement 7.2 vorgesehen, das drehbar um das Konstruktionselement 5.1 angeordnet. Dieses weist einen kleineren Durchmesser als das erste Antriebselement 7.1 auf. Es ist mit einer ersten Teillänge innerhalb des zwischen dem ersten Antriebselement 7.1 und dem Konstruktionselement 5.1 ausgebildeten kreisringförmigen Zwischenraum aufgenommen und über Lagerstellen gegenüber dem ersten Antriebselement drehbar hängend gehalten. Mit einer zweiten Teillänge steht das zweite Antriebselement 7.2 unterseitig gegenüber dem ersten Antriebselement 7.1 vor, wobei an diesem vorstehenden freien Ende das Transportelement 3 befestigt ist. Beispielsweise ist das zweite Antriebselement 7.2 durch eine mittig am Transportelement 3 angeordnete Bohrung durch eben dieses hindurchgeführt. Das zweite Antriebselement 7.2 kann an dem unterseitig vorstehenden freien Ende einen Flansch aufweisen, der zur Befestigung des Transportelements 3 gegenüber dem zweiten Antriebselement 7.2 dient.

In einem zwischen dem ersten Antriebselement 7.1 und dem zweiten Antriebselement 7.2 befindlichen Zwischenraum, der vorzugsweise kreisringsartig ausgebildet ist, sind Lagerstellen vorgesehen, um das zweite Antriebselement 7.2 und damit das an ihm befestigte Transportelement gegenüber dem drehfest gehaltenen ersten Antriebselement 7.1 bzw. dem Konstruktionselement 5.1 verdrehen zu können. In diesem Zwischenraum sind neben den Lagestellen auch die Wicklungen des elektromotorischen Antriebs 7 vorgesehen. Das erste Antriebselement 7.1 bildet damit den Stator und das zweite Antriebselement 7.2 als Hohlwelle den Rotor des Antriebs 7. Durch die erfindungsgemäße Ausbildung des Antriebs wird der zwischen dem plattenförmigen Konstruktionselement 5.4 und dem Transportelement 3 bestehende Zwischenraum optimal für die Anbringung des Antriebs 7 genutzt.

Die Erfindung wurde voranstehend an Ausführungsbeispielen beschrieben. Es versteht sich, dass eine Vielzahl von Änderungen oder Abwandlungen möglich sind, ohne dass dadurch der der Erfindung zugrundeliegende Erfindungsgedanke verlassen wird.

### Bezugszeichenliste

- 1: Transportvorrichtung
- 2: Behälter
- 2a: Behälterträger
- 3: Transportelement
- 3.1: Behälteraufnahme
- 4: Aufstellfläche
- 5: Befestigungseinrichtung
- 5.1: Konstruktionselement
- 5.2: Säule
- 5.2.1: Säulenabschnitt
- 5.3: Verbindungselement
- 5.4: Konstruktionselement
- 6: Transporteur
- 7: Antrieb
- 7.1: erstes Antriebselement
- 7.2: zweites Antriebselement
- 8: Stopperelement
- 9: Außenführung
- 10: Behälterbehandlungsmaschine
- 10a: Behandlungsstation
- 11: Rotor
- 12: Gleitblech

- H1: Höhenebene
- MA1: erste Maschinenachse
- MA2: zweite Maschinenachse
- P1: Einlauf
- P2: Auslauf
- TR: Transportrichtung
- ÜP: Übergabeposition

## Patentansprüche

1. Transportvorrichtung zur Zuführung und/oder Abführung von Behältern (2) zu Behälterbehandlungsmaschinen umfassend ein um eine vertikale Maschinenachse (MA1) rotierend antreibbares Transportelement (3) mit einer Vielzahl von Behälteraufnahmen (3.1), die umfangsseitig am Transportelement (3) angeordnet sind und mittels denen die Behälter (2) zumindest von einer ersten Position (P1, ÜP) in eine zweite Position (ÜP, P2) gefördert werden, wobei das Transportelement (3) hängend an einer auf einer Aufstellfläche (4) aufstehenden Befestigungseinrichtung (5) gehalten ist und wobei die Befestigungseinrichtung (5) zumindest ein die vertikale Maschinenachse (MA1) bildendes Konstruktionselement (5.1) aufweist, um das das Transportelement (3) umläuft, wobei das Konstruktionselement (5.1) unterseitig über das Transportelement (3) vorsteht und an dem unterseitig vorstehenden Abschnitt des Konstruktionselements (5.1) weitere mit dem Transportelement (3) zusammenwirkende Führungs- oder Transfereinrichtungen (9, 12) gehalten sind, **dadurch gekennzeichnet, dass** ein Antrieb (7) zwischen einem stationär an der Befestigungseinrichtung (5) gehaltenen ersten Antriebselement (7.1) und einem das Konstruktionselement (5.1) umfangsseitig umgebenden zweiten Antriebselement (7.2) angeordnet ist, und das zweite Antriebselement (7.2) als Hohlwelle ausgebildet ist und sich mit einem ersten Ende in den Antrieb (7) hinein erstreckt und an einem zweiten Ende mit dem Transportelement (3) verbunden ist.

2. Transportvorrichtung nach Anspruch 1, **dadurch gekennzeichnet, dass** die Befestigungseinrichtung (5) durch ein das Transportelement (3) zumindest teilweise oberseitig überspannendes Gestell gebildet wird.

3. Transportvorrichtung nach einem der vorhergehenden Ansprüche, **dadurch gekennzeichnet, dass** das Konstruktionselement (5.1) verdrehsicher an der Befestigungseinrichtung (5) gehalten ist.

4. Transportvorrichtung nach einem der vorhergehenden Ansprüche, **dadurch gekennzeichnet, dass** das Transportelement (3) das Konstruktionselement (5.1) umfangsseitig umgibt.

5. Transportvorrichtung nach einem der vorhergehenden Ansprüche, **dadurch gekennzeichnet, dass** zumindest ein Transporteur (6) zum Zu- und/oder Abführen von Behältern (2) zu/von dem Transportelement (3) vorgesehen ist, wobei dieser Transporteur (6) zumindest abschnittsweise durch die das Transportelement halternde Befestigungseinrichtung (5) getragen wird.

6. Transportvorrichtung nach Anspruch 5, **dadurch gekennzeichnet, dass** ein einziger Transporteur (6) zum Zu- und Abführen von Behältern (2) an das/von dem Transportelement (3) vorgesehen ist.

7. Transportvorrichtung nach Anspruch 5 oder 6, **dadurch gekennzeichnet, dass** der Transporteur (6) unter dem Transportelement (3) hindurchlaufend ausgebildet ist.

8. Transportvorrichtung nach Anspruch 6, **dadurch gekennzeichnet, dass** der Transporteur (6) unter oder zentriert unter der Maschinenachse (MA1) des Transportelements (3) hindurchlaufend ausgebildet ist.

9. Transportvorrichtung nach einem der vorhergehenden Ansprüche, **dadurch gekennzeichnet, dass** als Antrieb (7) für das Transportelement (3) ein Direktantrieb oder ein Torque-Motor vorgesehen ist.

10. Transportvorrichtung nach einem der vorhergehenden Ansprüche, **dadurch gekennzeichnet, dass** das Transportelement (3) ein Transferstern ist.

## Claims

1. Conveyor system for delivering and/or removing containers (2) from container processing machines, comprising a conveyor element (3) which is rotatingly driveable about a vertical machine axis (MA1) and has a plurality of container holders (3.1) which are circumferentially arranged on the conveyor element (3) and by means of which the containers (2) are conveyed at least from a first position (P1, ÜP) into a second position (ÜP, P2), wherein the conveyor element (3) is held suspended on a securing arrangement (5) standing on an installation surface (4), and wherein the securing arrangement (5) comprises at least one structural element (5.1) forming the vertical machine axis (MA1), circulating about the conveyor element (3), wherein the structural element (5.1) projects on the underside over the conveyor element (3) and, on the underside projecting section of the structural element (5.1), further guiding or transfer devices (9, 12) interacting with the conveyor element (3) are held, **characterised in that** a drive (7) is arranged between a first drive element (7.1), held stationary at the securing arrangement (5), and a second drive element (7.2) circumferentially surrounding the structural element (5.1), and the second drive element (7.2) is configured as a hollow shaft and extends with a first end into the drive (7) and at a second end is connected to the conveyor element (3).

2. Conveyor system according to claim 1, **characterised in that** the securing arrangement (5) is formed by a frame which spans the conveyor element (3) at least partially on the upper side.

3. Conveyor system according to any one of the preceding claims, **characterised in that** the structural element (5.1) is held secure against rotation on the securing arrangement (5).

4. Conveyor system according to any one of the preceding claims, **characterised in that** the conveyor element (3) surrounds the structural element (5.1) on the circumferential side.

5. Conveyor system according to any one of the preceding claims, **characterised in that** at least one conveyor (6) is provided for delivering and/or removing containers (2) to/from the conveyor element (3), wherein this conveyor (6) is at least in sections carried by the securing arrangement (5) holding the conveyor element.

6. Conveyor system according to claim 5, **characterised in that** a single conveyor (6) is provided for delivering and removing containers (2) to/from the conveyor element (3).

7. Conveyor system according to claim 5 or 6, **characterised in that** the conveyor (6) is configured so as to run through its course below the conveyor element (3).

8. Conveyor system according to claim 6, **characterised in that** the conveyor (6) is formed under or centred under the machine axis (MA1) of the conveyor element (3).

9. Conveyor system according to any one of the preceding claims, **characterised in that**, as a drive (7) for the conveyor element (3) a direct drive or a torque motor is provided.

10. Conveyor system according to any one of the preceding claims, **characterised in that** the conveyor element (3) is a transfer star.

## Revendications

1. Dispositif de transport pour l'alimentation et/ou l'évacuation de récipients (2) à des machines de traitement de récipient comprenant un élément de transport (3) entraînable en rotation autour d'un axe de machine vertical (MA1) avec une pluralité de logements de récipient (3.1) qui sont agencés côté périphérie sur l'élément de transport (3) et à l'aide desquels les récipients (2) sont transportés au moins d'une première position (P1, ÜP) à une seconde position (ÜP, P2), dans lequel l'élément de transport (3) est maintenu suspendu sur un dispositif de fixation (5) dressé sur une surface d'installation (4), et dans lequel le dispositif de fixation (5) présente au moins un élément de construction (5.1) formant l'axe de machine (MA1) vertical, autour duquel l'élément de transport (3) tourne, dans lequel l'élément de construction (5.1) dépasse côté dessous de l'élément de transport (3) et sur la section dépassant côté dessous de l'élément de construction (5.1), d'autres dispositifs de guidage ou de transfert (9, 12) coagissant avec l'élément de transport (3) sont maintenus, **caractérisé en ce qu'**un entraînement (7) est agencé entre un premier élément d'entraînement (7.1) maintenu de manière stationnaire sur le dispositif de fixation (5) et un second élément d'entraînement (7.2) entourant côté périphérie l'élément de construction (5.1), et le second élément d'entraînement (7.2) est réalisé comme arbre creux et s'étend avec une première extrémité dans l'entraînement (7) et est relié sur une seconde extrémité à l'élément de transport (3).

2. Dispositif de transport selon la revendication 1, **caractérisé en ce que** le dispositif de fixation (5) est formé par un bâti recouvrant au moins partiellement côté dessus l'élément de transport (3).

3. Dispositif de transport selon l'une des revendications précédentes, **caractérisé en ce que** l'élément de construction (5.1) est maintenu de manière bloquée en rotation sur le dispositif de fixation (5).

4. Dispositif de transport selon l'une des revendications précédentes, **caractérisé en ce que** l'élément de transport (3) entoure côté périphérie l'élément de construction (5.1).

5. Dispositif de transport selon l'une des revendications précédentes, **caractérisé en ce qu'**au moins un transport (6) est prévu pour l'alimentation et/ou l'évacuation de récipients (2) vers/de l'élément de transport (3), dans lequel ce transporteur (6) est porté au moins par section par le dispositif de fixation (5) tenant l'élément de transport.

6. Dispositif de transport selon la revendication 5, **caractérisé en ce qu'**un seul transporteur (6) est prévu pour l'alimentation et l'évacuation de récipients (2) vers/de l'élément de transport (3).

7. Dispositif de transport selon la revendication 5 ou 6, **caractérisé en ce que** le transporteur (6) est réalisé passant sous l'élément de transport (3).

8. Dispositif de transport selon la revendication 6, **caractérisé en ce que** le transporteur (6) est réalisé passant sous ou centré sous l'axe de machine (MA1) de l'élément de transport (3).

9. Dispositif de transport selon l'une des revendications précédentes, **caractérisé en ce qu'**un entraînement direct ou un moteur à couple est prévu comme entraînement (7) pour l'élément de transport (3).

10. Dispositif de transport selon l'une des revendications précédentes, **caractérisé en ce que** l'élément de transport (3) est une étoile de transfert.
